# FASCICULE DE BREVET EUROPEEN

(11) **EP 0 810 117 B1**
(45) Date de publication et mention de la délivrance du brevet: **22.08.2001**
(21) Numéro de dépôt: 97401147.0
(22) Date de dépôt: 26.05.1997
(51) Int. Cl.: B60Q 1/04

(54) **Dispositif de fixation d'un dispositif de signalisation ou d'éclairage d'un vehicule**
Befestigungselemente für Signal- oder Beleuchtungseinrichtung eines Kraftfahrzeuges
Mounting means for vehicle signalling or lighting device

(30) Priorité: 28.05.1996 FR 9606549
(43) Date de publication de la demande: 03.12.1997
(73) Titulaire: VALEO VISION, 93000 Bobigny (FR)
(72) Inventeur: Virette, Jacques, 77410 Claye-Souilly (FR); Casses, Daniel, 93370 Montfermeil (FR)
(74) Mandataire: Le Forestier, Eric

(56) Documents cités:
- BE-A- 537 930

## Description

La présente invention concerne un dispositif de fixation d'un dispositif de signalisation et/ou d'éclairage sur la carrosserie d'un véhicule, permettant de rattraper les différents jeux en translation et en rotation, notamment dus aux tolérances de fabrication, en particulier de la carrosserie.

Pour des raisons essentiellement esthétiques, les constructeurs automobiles recherchent depuis quelques années à intégrer précisément les feux et projecteurs aux formes du véhicule, afin de rattraper les écarts dus aux tolérances de fabrication.

Il existe dans l'état de la technique certains dispositifs de fixation qui comprennent plusieurs éléments rapportés entre le boîtier ou le socle du dispositif de signalisation et/ou d'éclairage et la carrosserie du véhicule.

Ainsi dans le document FR-A-2 719 269, la Demanderesse a proposé un dispositif de fixation permettant un réglage selon trois axes de la position relative d'un boîtier de dispositif de signalisation et/ou d'éclairage à la carrosserie du véhicule comprenant deux éléments coulissants l'un par rapport à l'autre, une vis de serrage et des moyens d'immobilisation de l'ensemble dans une position de blocage.

Mais ce type de dispositif a l'inconvénient de nécessiter de nombreuses pièces, et en corrollaire des opérations fastidieuses lors du montage et du démontage du dispositif, ce qui complique la pose du dispositif de signalisation et/ou d'éclairage et accroît les coûts de production. En outre, les rattrapages de jeux angulaires ne sont pas toujours parfaitement réalisés.

Un autre dispositif de fixation communément utilisé comprend une patte souple, solidaire du boîtier du dispositif de signalisation et/ou d'éclairage et recevant une vis coopérant avec un support de la carrosserie.

Ce dispositif connu est simple d'utilisation et peu coûteux, mais s'adapte mal à une grande variété de défauts de positionnements et en particulier à un défaut de position angulaire des surfaces du boîtier et de la carrosserie du véhicule.

L'objet de la présente invention est de proposer un dispositif de fixation d'un dispositif de signalisation et/ou d'éclairage, simple et économique, et dont l'aptitude à rattraper les jeux soit nettement améliorée.

Un autre but de l'invention est de proposer un dispositif de fixation permettant le montage et le démontage d'un boîtier sur la carrosserie du véhicule de façon simple et rapide.

Le dispositif de l'invention comprend une patte flexible, solidaire du boîtier et supportant un aménagement de fixation, et se caractérise en ce que ladite patte est réalisée d'un seul tenant avec le boîtier et reliée à celui-ci en deux extrémités opposées, en ce que ledit aménagement de fixation se trouve en une partie intermédiaire de ladite patte, et en ce que ladite patte présente un profil sinueux assurant, par déformation élastique, un degré de liberté dudit aménagement de fixation en translation selon trois axes ainsi qu'en basculement.

De préférence, la patte s'étend le long d'une paroi du boîtier entre deux nervures en saillie à partir de ladite paroi, et présente au moins trois zones courbes et une zone courbe élargie au niveau dudit aménagement, située sensiblement à mi-chemin des deux extrémités de la patte.

Avantageusement, ledit aménagement de fixation consiste en un canon possédant une face d'appui avec un aménagement de la carrosserie et traversé par une vis, et le boîtier ainsi que le dispositif de fixation sont réalisés par moulage.

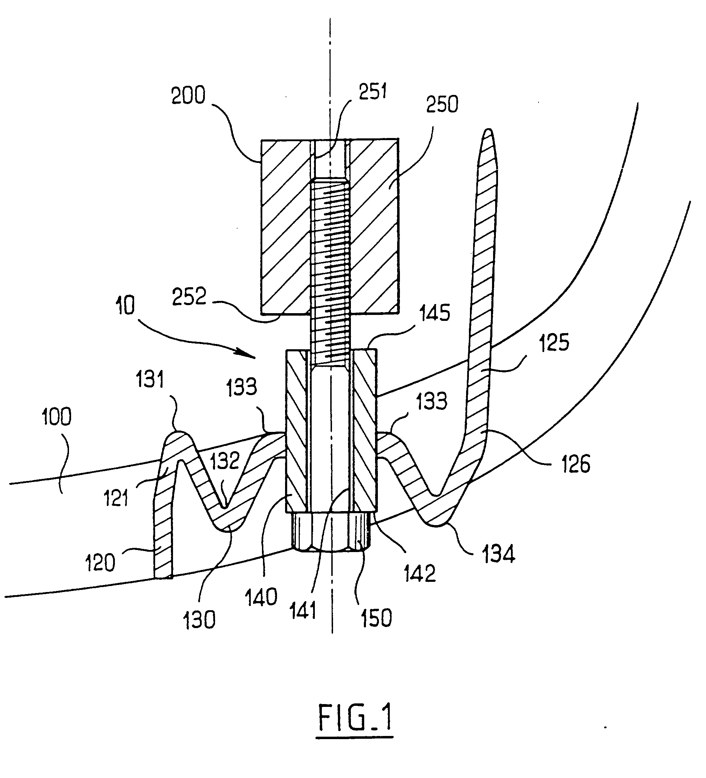

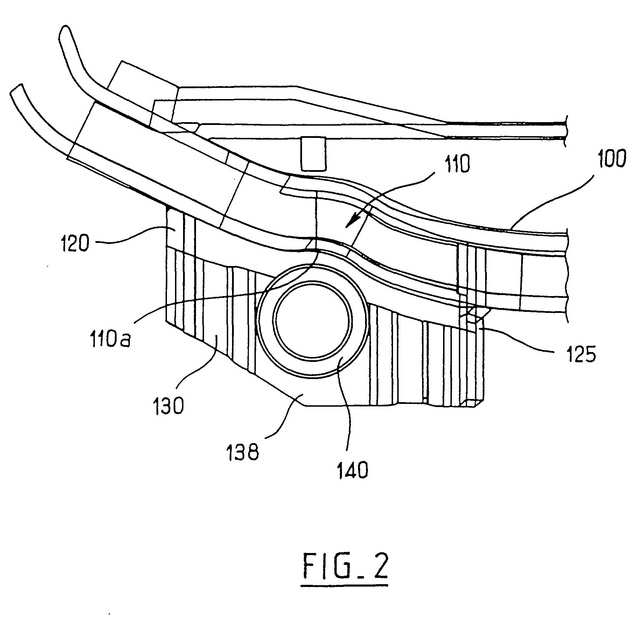

D'autres caractéristiques et avantages de l'invention apparaîtront à la lecture de la description qui suit. Cette description est purement illustrative et non limitative et doit être lue en regard des dessins annexés sur lesquels :
. la figure 1 est une vue de dessus en coupe du dispositif de fixation d'un boîtier projecteur monté sur la carrosserie du véhicule; et
. la figure 2 est une vue de l'arrière en plan du dispositif de fixation de la figure 1.

Le dispositif 10 de l'invention représenté sur la figure 1 est réalisé d'un seul tenant (par exemple venu de moulage) avec le boîtier 100 d'un projecteur de véhicule automobile et monté sur la carrosserie 200 du véhicule.

Le dispositif 10 comprend principalement deux nervures 120 et 125 en saillie vers le bas à partir d'une zone d'attache 110 du boîtier 100 du projecteur, une patte mince sinueuse 130 s'étendant essentiellement transversalement entre les deux nervures et possédant en son milieu un canon de fixation 140, et une vis 150 passant au travers du canon de fixation et coopérant avec un support de fixation 250 solidaire de la carrosserie.

Les nervures 120 et 125 sont de forme allongée et s'étendent sensiblement verticalement à des hauteurs différentes.

L'extrémité avant 121 dans le sens du vissage de la nervure 120 est sensiblement dans l'alignement en direction latérale de l'extrémité arrière 126 de la nervure 125, et la patte sinueuse 130 s'étend entre ces extrémités le long de la zone d'attache 110 du boîtier et légèrement espacée vers le bas par rapport à celle-ci. La patte sinueuse est de largeur sensiblement constante entre chacune de ses deux extrémités 121 et 126 et le canon de fixation 140, et elle présente un léger renflement 138 au-dessous du canon 140. La patte se raccorde au canon de fixation 140 sensiblement en son milieu en direction axiale.

La patte présente en section verticale quatre zones courbes alternées 131 à 134, la zone courbe 133 étant élargie pour englober le canon 140.

Dans le présent exemple, ces zones sont courbées autour d'axes de courbures généralement perpendiculaires à la paroi adjacente du boîtier, et en l'espèce verticaux.

On peut bien entendu, en variante, prévoir des courbures autour d'axes d'orientations quelconques, notamment autour d'axes parallèles à la paroi du boîtier.

Le canon de fixation 140 prévu sur la patte 130 est cylindrique et présente un alésage 141 pour le passage de la vis 150, débouchant au niveau de deux faces d'appui 142 et 145. Les deux faces sont perpendiculaires à l'axe du cylindre, et l'alésage est centré sur l'axe du cylindre.

Le diamètre de l'alésage 141 est légèrement supérieur au diamètre de la vis 150 et permet son passage libre.

Le support de fixation 250, solidaire de la carrosserie, est par exemple cylindrique et possède un taraudage 251 permettant le vissage de la vis 150.

Les diamètres extérieurs du support de fixation 250 et du canon 140 sont choisis suffisamment grands pour réaliser une surface de contact importante, et donc un appui stable entre le canon et le support.

Sur le boîtier du projecteur, la zone d'attache 110, qui est à proximité de la patte 130 et du canon 140, possède une concavité 110a au voisinage du canon pour permettre le libre débattement de celui-ci.

La proximité du canon 140 avec le boîtier confère avantageusement à l'ensemble du dispositif une bonne fermeté de fixation et un encombrement réduit.

Le dispositif qui vient d'être décrit est utilisé de la façon suivante, lors du montage du projecteur.

Le dispositif de fixation 10 du boîtier 100 du projecteur est placé sur la carrosserie du véhicule, au niveau du support 250 de la carrosserie. La vis 150 est introduite dans le canon 140 du dispositif et vissée dans le support 250, jusqu'à amener la face 145 du canon de fixation en appui contre la face 252 du support de la carrosserie. La forme sinueuse de la patte et sa flexibilité confèrent au canon une bonne mobilité en translation et en rotation, pour compenser les écarts dus aux tolérances tout en assurant une bonne fermeté de la fixation.

On observera que la fixation du boîtier 100 sur la carrosserie 200 peut être réalisée avec un nombre quelconque de dispositifs de fixation.

Selon plusieurs variantes, il est possible de réaliser l'ensemble des nervures 120 et 125, de la patte 130 et du canon 140 dans une matière plastique ou dans des matériaux différents pour améliorer la solidité et la mobilité du dispositif.

## Revendications

1. Dispositif de fixation d'un boîtier (100) de dispositif d'éclairage et/ou de signalisation d'un véhicule automobile sur la carrosserie (200) du véhicule, comprenant une patte flexible (130) solidaire du boîtier et supportant un aménagement de fixation (140), caractérisé en ce que ladite patte (130) est réalisée d'un seul tenant avec le boîtier (100) et reliée à celui-ci en deux extrémités (121, 126) opposées, en ce que ledit aménagement de fixation (140) se trouve en une partie intermédiaire de ladite patte (130), et en ce que ladite patte présente un profil sinueux apte par déformation élastique à donner un degré de liberté audit aménagement de fixation en translation selon trois axes ainsi qu'en basculement.

2. Dispositif selon la revendication 1, caractérisé en ce que la patte (130) s'étend le long d'une paroi (150) du boîtier entre deux nervures (120, 125) espacées en saillie à partir de ladite paroi.

3. Dispositif selon la revendication 1 ou 2, caractérisé en ce que la patte (130) présente en section au moins trois zones courbes (131-134).

4. Dispositif selon la revendication 3, caractérisé en ce qu'une zone courbe centrale (133) est élargie au niveau dudit aménagement de fixation (140).

5. Dispositif selon la revendication 1 ou 2, caractérisé en ce que l'aménagement de fixation (140) est situé sensiblement à mi-chemin entre les deux extrémités de la patte (130).

6. Dispositif selon l'une des revendications 1 à 5, caractérisé en ce que ledit aménagement de fixation consiste en un canon (140) possédant une face annulaire plane d'appui (145) contre un aménagement (250) de la carrosserie et apte à être traversé par une vis (150).

7. Dispositif selon l'une des revendications 1 à 6, caractérisé en ce que le boîtier (100) est réalisé par moulage de matière plastique, et en ce que le dispositif de fixation est venu de moulage.

8. Dispositif selon l'une des revendications 1 à 7, caractérisé en ce que le profil sinueux est défini par une pluralité de courbures autour d'axes de courbure généralement perpendiculaires à une paroi adjacente (110) du boîtier.

9. Dispositif selon l'une des revendications 1 à 7, caractérisé en ce que le profil sinueux est défini par une pluralité de courbures autour d'axes de courbure généralement parallèles à une paroi adjacente (110) du boîtier.

10. Dispositif d'éclairage et/ou de signalisation de véhicule automobile, caractérisé en ce qu'il comporte un boîtier (100) possédant un dispositif de fixation (10) selon l'une des revendications 1 à 9.

## Patentansprüche

1. Vorrichtung zur Befestigung eines Gehäuses (100) einer Beleuchtungs- und/oder Signalgebungsvorrichtung eines Kraftfahrzeugs an der Karosserie (200) des Fahrzeugs mit einer biegsamen Lasche (130), die mit dem Gehäuse fest verbunden ist und eine Befestigungseinrichtung (140) trägt,
dadurch gekennzeichnet, daß diese Lasche (130) mit dem Gehäuse (100) einstückig ausgebildet und mit diesem an zwei entgegengesetzten Enden (121, 126) verbunden ist, daß sich die genannte Befestigungseinrichtung (140) in einem mittleren Bereich dieser Lasche (130) befindet und daß die Lasche ein gewundenes Profil aufweist, welches durch elastische Verformung in der Lage ist, der genannten Befestigungseinrichtung eine gewisse Freiheit beim Kippen sowie beim Verschieben entlang dreier Achsen zu verleihen.

2. Vorrichtung nach Anspruch 1,
dadurch gekennzeichnet, daß sich die Lasche (130) an der Längsseite einer Wand (150) des Gehäuses zwischen zwei Rippen (120, 125) erstreckt, die von dieser Wand vorspringend voneinander beabstandet sind.

3. Vorrichtung nach Anspruch 1 oder 2,
dadurch gekennzeichnet, daß die Lasche (130) im Querschnitt mindestens drei gekrümmte Zonen (131-134) aufweist.

4. Vorrichtung nach Anspruch 3,
dadurch gekennzeichnet, daß eine mittige, gekrümmte Zone (133) im Bereich der genannten Befestigungseinrichtung (140) erweitert ist.

5. Vorrichtung nach Anspruch 1 oder 2,
dadurch gekennzeichnet, daß sich die Befestigungseinrichtung (140) im wesentlichen in der Mitte zwischen den beiden Enden der Lasche (130) befindet.

6. Vorrichtung nach einem der Ansprüche 1 bis 5,
dadurch gekennzeichnet, daß die Befestigungseinrichtung aus einer Hülse (140) besteht, die eine flache, ringförmige Auflagefläche (145) für eine Einrichtung (250) der Karosserie aufweist und zur Durchführung einer Schraube (150) geeignet ist.

7. Vorrichtung nach einem der Ansprüche 1 bis 6,
dadurch gekennzeichnet, daß das Gehäuse (100) aus Kunststoff geformt ist und die Befestigungsvorrichtung beim Gießvorgang entsteht.

8. Vorrichtung nach einem der Ansprüche 1 bis 7,
dadurch gekennzeichnet, daß das gewundene Profil durch eine Vielzahl von Krümmungen um Krümmungsachsen definiert wird, die im wesentlichen senkrecht zu einer angrenzenden Wand (110) des Gehäuses verlaufen.

9. Vorrichtung nach einem der Ansprüche 1 bis 7,
dadurch gekennzeichnet, daß das gewundene Profil durch eine Vielzahl von Krümmungen um Krümmungsachsen definiert wird, die im wesentlichen parallel zu einer angrenzenden Wand (110) des Gehäuses verlaufen.

10. Beleuchtungs- und/oder Signalgebungsvorrichtung eines Kraftfahrzeugs,
dadurch gekennzeichnet, daß sie ein Gehäuse (100) mit einer Befestigungsvorrichtung (10) nach einem der Ansprüche 1 bis 9 aufweist.

## Claims

1. Device for fixing the housing (100) of a lighting and/or signalling device on a motor vehicle to the bodywork (200) of the vehicle, comprising a flexible lug (130) fixed to the housing and supporting a fixing arrangement (140), characterised in that the said lug (130) is produced in one piece with the housing (100) and connected thereto at two opposite ends (121, 126), in that the said fixing arrangement (140) is situated at an intermediate part of the said lug (130), and in that the said lug has a sinuous profile able, by elastic deformation, to give a degree of freedom to the said fixing arrangement in translation along three axes as well as in tilting.

2. Device according to Claim 1, characterised in that the lug (130) extends along one wall (150) of the housing between two spaced-apart ribs (120, 125) projecting from the said wall.

3. Device according to Claim 1 or 2, characterised in that the lug (130) has, in cross-section, at least three curved areas (131-134).

4. Device according to Claim 3, characterised in that a central curved area (133) is broadened at the said fixing arrangement (140).

5. Device according to Claim 1 or 2, characterised in that the fixing arrangement (140) is situated substantially halfway between the two ends of the lug (130).

6. Device according to one of Claims 1 to 6, characterised in that the said fixing arrangement consists of a barrel (140) having a flat annular face (145) abutting against an arrangement (250) on the bodywork and able to have a screw (150) pass through it.

7. Device according to one of Claims 1 to 6, characterised in that the housing (100) is produced by plastic moulding, and in that the fixing device is moulded.

8. Device according to one of Claims 1 to 7, characterised in that the sinuous profile is defined by a plurality of curves around axes of curvature generally perpendicular to an adjacent wall (110) of the housing.

9. Device according to one of Claims 1 to 7, characterised in that the sinuous profile is defined by a plurality of curves around axes of curvature generally parallel to an adjacent wall (110) of the housing.

10. Lighting and/or signalling device for a motor vehicle, characterised in that it has a housing (100) with a fixing device (10) according to one of Claims 1 to 9.
